# EUROPÄISCHE PATENTSCHRIFT

(11) **EP 1 733 183 B1**
(45) Veröffentlichungstag und Bekanntmachung des Hinweises auf die Patenterteilung: **13.02.2008**
(21) Anmeldenummer: 05716241.4
(22) Anmeldetag: 19.03.2005
(51) Int. Cl.: G01B 21/04

(54) **VERFAHREN UND VORRICHTUNG ZUR VERMESSUNG EINES MESSOBJEKTS**
METHOD AND DEVICE FOR MEASURING AN OBJECT FOR MEASUREMENT
PROCEDE ET DISPOSITIF POUR EFFECTUER DES MESURES SUR UN OBJET

(30) Priorität: 02.04.2004 DE 102004017172
(43) Veröffentlichungstag der Anmeldung: 20.12.2006
(73) Patentinhaber: Lugtenburg, Jan Bernd, 73430 Aalen (DE)
(72) Erfinder: Lugtenburg, Jan Bernd, 73430 Aalen (DE)
(74) Vertreter: Ruff, Michael
(86) Internationale Anmeldenummer: PCT/EP2005/002960
(87) Internationale Veröffentlichungsnummer: WO 2005/098354

(56) Entgegenhaltungen:
- EP-A- 0 177 038
- EP-A- 0 661 518
- DE-A1- 3 836 540
- PATENT ABSTRACTS OF JAPAN Bd. 018, Nr. 258 (M-1606), 17. Mai 1994 (1994-05-17) & JP 06 039683 A (O M LTD), 15. Februar 1994 (1994-02-15)
- PATENT ABSTRACTS OF JAPAN Bd. 006, Nr. 240 (M-174), 27. November 1982 (1982-11-27) & JP 57 137135 A (SUMITOMO GOMU KOGYO KK), 24. August 1982 (1982-08-24)
- PATENT ABSTRACTS OF JAPAN Bd. 1998, Nr. 11, 30. September 1998 (1998-09-30) & JP 10 147417 A (KYOKUTO KAIHATSU KOGYO CO LTD; SHIMAZU MEKUTEMU KK), 2. Juni 1998 (1998-06-02)

## Beschreibung

Die Erfindung betrifft ein Verfahren sowie eine Vorrichtung zur Vermessung eines Messobjekts, das zumindest eine Referenzstruktur zur Definition eines objektfesten Objektkoordinatensystems aufweist, mit Hilfe eines Messsystems, das mindestens ein Sensorsystem zur Erfassung einer Kontur des Messobjekts in einem Messkoordinatensystem umfasst.

Derartige Messsysteme werden beispielsweise zur Qualitätssicherung bei der Produktion von Kraftfahrzeugrädern benutzt. Bei Kraftfahrzeugrädern werden hohe Anforderungen an die Genauigkeit des Messverfahrens und an die Messdauer, innerhalb derer die Vermessung der Kraftfahrzeugräder erfolgt, gestellt. Die immer weiter steigenden Qualitätsanforderungen im Bereich der Kraftfahrzeugräder beruhen unter Anderem darauf, dass Einflüsse auf das dynamische Verhalten eines Fahrwerks des Kraftfahrzeuges immer stärker durch die Eigenschaften von rotierenden Elementen wie beispielsweise einer Nabe mit integrierter Bremsscheibe bzw. Bremstrommel und/oder von dem Kraftfahrzeugrad und dem darauf aufgezogenen Reifen bestimmt werden. Die Bedeutung dieser Einflüsse wird durch den Einsatz von Leichtbau-Fahrwerken aus Leichtmetall und/oder hochfesten Stahllegierungen verstärkt, da der Gewichtsanteil der Fahrwerke an den ungefederten Massen stetig abnimmt, während Einflüsse, die auf Kontur- bzw. Maßabweichungen des sich drehenden Kraftfahrzeugrads und des Reifens zurückzuführen sind, immer stärker hervortreten.

Bei Lastkraftwagen, bei denen zur Erhöhung der Nutzlast ein erheblicher Aufwand zur Reduzierung des Gewichts der Kraftfahrzeugräder betrieben wird, kommen immer leichtere und damit bezüglich der Formgenauigkeit empfindlichere Kraftfahrzeugräder zum Einsatz. Darüber hinaus ergeben sich bei Lastkraftwagen in Anbetracht des steigenden Geschwindigkeitsniveaus auch verstärkt dynamische Einflüsse der Kraftfahrzeugräder auf das Fahrverhalten, das damit wesentlich durch die Formgenauigkeit der Kraftfahrzeugräder bestimmt wird. Dies gilt insbesondere bei leichten Transportern, die in Geschwindigkeitsbereiche von weit über 160 km/h vorstoßen und damit ähnliche Problemstellungen wie bei Personenkraftwagen hervorrufen.

Bei Personenkraftwagen, die ggf. mit noch höheren Geschwindigkeiten betrieben werden können und verstärkt mit elektronisch geregelten Fahrwerken ausgestattet werden, erhöhen sich die Anforderungen an die dynamischen Eigenschaften des Kraftfahrzeugrads und des zugeordneten Reifens ebenfalls. Relevante Formabweichungen von der angestrebten Rotationsähnlichkeit müssen bereits in der Produktion des Kraftfahrzeugrads erkannt und gegebenenfalls beseitigt werden. Dies führte bereits in der Vergangenheit dazu, dass Toleranzen an den Kraftfahrzeugrädern deutlich eingeschränkt wurden. Typische Rundlauf- und Formtoleranzen für einen Reifensitz an einem Kraftfahrzeugrad liegen heute im Bereich von 0,3 mm, Positionstoleranzen für eine Befestigungsbohrung bei ca. 0,15 mm, eine als Referenzstruktur nutzbare Nabenbohrung ist sogar mit Werten zwischen 0,02 und 0,05 mm toleriert. Die Einhaltung dieser Toleranzen im Serienfertigungsprozess, insbesondere bei der Herstellung von gegossenen Leichtmetallrädern, ist mit heute eingesetzten Fertigungseinrichtungen und den für eine profitable Fertigung einzuhaltenden Bearbeitungszeiten in der mechanischen Bearbeitung (Drehen, Bohren bei Leichtmetallrädern, Rollen, Tiefziehen, Pressen, Schweißen, Kalibrieren bei Stahlrädern) an der Grenze der Machbarkeit. Dies macht die Prüfung vieler oder aller Räder unabdingbar, da die Prozessfenster für einzelne Verfahrensschritte klein sind und mit Stichprobenkontrollen keine ausreichende statistische Sicherheit für einen qualitativ hochwertigen Fertigungsprozess erreicht werden kann.

Ein bekanntes Messsystem für Kraftfahrzeugräder ist in der DE 38 36 540 C2 beschrieben, die eine Mehrstellenmesseinrichtung zur Vermessung von Kraftfahrzeugrädern, deren Felgen und/oder Radschüsseln beschreibt. Die Mehrstellenmesseinrichtung weist eine Mehrzahl von Messwertaufnehmern auf, die um eine zentrale Aufspanneinheit angeordnet sind. Die zentrale Aufspanneinheit dient zur Zentrierung und Vermessung des Mittellochs des Kraftfahrzeugrads und zur Einleitung einer Rotation des Kraftfahrzeugrads um eine Rotationsachse, um den Umfang der Felge an den Messwertaufnehmern für eine Vermessung vorbeizuführen. Die Messwertaufnehmer sind dabei als radial zur Rotationsachse der Aufspanneinheit verschiebbare Positionierschlittensysteme mit rechnergesteuerten Positionierantrieben ausgeführt und tasten die Reifensitze, die Bolzenlöcher und weitere relevante Merkmale und damit die Kontur des zu vermessenden Kraftfahrzeugrades während der Drehung des Kraftfahrzeugrads mechanisch mit Hilfe von Messrollen ab. Somit lassen sich alle relevanten Konturen durch eine Rotation des Kraftfahrzeugrads mittels der zentralen Aufspanneinheit abtasten. In Anbetracht der Formen- und Größenvielfalt von Kraftfahrzeugrädern, die üblicherweise mit einer derartigen Messeinrichtung geprüft werden, sind erhebliche Vorkehrungen für die Gestaltung der zentralen Aufspanneinheit und der Messwertaufnehmer zu treffen, die Auswirkungen auf die Kosten, die Genauigkeit und die Zuverlässigkeit einer derartigen Mehrstellenmesseinrichtung haben.

Die EP-A-0 177 038 beschreibt ein Verfahren und eine Vorrichtung zum Vermessen eines Objektes, das eine Referenzstruktur zur Definition eines Objektkoordinatensystems aufweist. Mit einem Messsystem kann das im Erfassungsbereich der Sensoren des Messsystems positionierte Objekt nach Feststellung der Lage des Objektkoordinatensystems bezüglich seiner Kontur vermessen werden, wobei das Sensorsystem um eine am feststehenden Messsystem vorgesehene Drehachse relativ zum Objekt gedreht werden kann.

Eine der Erfindung zugrundeliegende Aufgabe besteht darin, ein Verfahren sowie eine Vorrichtung der eingangs genannten Art zu schaffen, die eine einfachere und kostengünstigere Vermessung von Messobjekten, insbesondere Kraftfahrzeugrädern, ermöglicht. Eine andere Aufgabe besteht darin, ein Messverfahren und eine zu dessen Durchführung geeignete Messvorrichtung bereitzustellen, mit der rotationsähnliche oder weitgehend rotationssymmetrische Messobjekte, wie z.B. Kraftfahr-zeugräder, unabhängig von ihren Dimensionen schnell und hochgenau vermessen werden können. Insbesondere soll eine fertigungsnahe dimensionelle Vermessung vieler oder aller funktionsrelevanter Maße mit einer dem Fertigungsprozess anpassbaren Geschwindigkeit ermöglicht werden. Weiterhin soll eine schnelle Umrüstung auf unterschiedliche Messobjektdimensionen ermöglicht werden.

Diese Aufgaben werden durch ein Verfahren gemäß dem Anspruch 1 und eine zur Durchführung des Verfahrens geeigneten Vorrichtung nach dem Anspruch 13 gelöst. Vorteilhafte Weiterbildungen sind in den abhängigen Ansprüchen angegeben. Der Wortlaut sämtlicher Ansprüche wird durch Bezugnahme zum Inhalt dieser Beschreibung gemacht.

Zur Durchführung des Verfahrens, insbesondere unter Verwendung der Vorrichtung, wird das Messobjekt in einer Messposition positioniert, wobei die Messposition im Erfassungsbereich des Sensorsystems liegt, um eine ggf. vollständige Erfassung der Kontur des Messobjekts zu ermöglichen. Die Vermessung des Messobjekts erfolgt im Messkoordinatensystem. Die Feststellung der Lage des Objektkoordinatensystems des Messobjekts anhand der Referenzstruktur dient zur Schaffung eines Bezugs zwischen der zu ermittelnden Kontur des Messobjekts und dem Objektkoordinatensystem des Messobjekts. Für die Konturermittlung werden Konturdaten durch die Drehung des Sensorsystems um eine Drehachse relativ zum Messobjekt ermittelt, die anschließend unter Berücksichtigung der Lage des Objektkoordinatensystems in einer Auswerteeinheit verarbeitet werden können. Dabei können die Konturturdaten während und/oder nach der Messung mittels einer Transformation aus dem Messkoordinatensystem in das Objektkoordinatensystem übertragen werden, so dass eine Qualitätsbeurteilung, insbesondere durch Vergleich der ermittelten Konturdaten mit Referenzdaten, die in der Auswerteeinheit abgelegt sind, vorgenommen werden kann.

Bei den aus dem Stand der Technik bekannten Messsystemen für Kraftfahrzeugräder oder andere weitgehend rotationssymmetrische Messobjekte ist eine Rotation des Messobjekts bei feststehendem Sensorsystem vorgesehen, was ein Beschleunigen und Abbremsen des Messobjekts, das große Gewichts- und Dimensionsvarianz aufweisen kann, erfordert. Durch die Drehung des Sensorsystems um das Messobjekt herum in der erfindungsgemäßen Messeinrichtung kann auf eine Bewegung des Messobjekts für die Durchführung des Messvorgangs verzichtet werden. Gewicht und Dimension des Messobjekts beeinflussen die Dynamik des Messvorgangs nicht, da mit der Rotation des Sensorsystem ein System mit konstanten dynamischen Eigenschaften bewegt wird. Bei einer Weiterbildung ruht das Messobjekt während der Vermessung, während sich das Sensorsystem um eine Achse dreht, die vom Umfang des Messobjektes eingeschlossen ist. Weiterhin entfällt die Problematik einer mechanischen Zentrierung des Messobjekts anhand einer in der Regel sehr sensiblen Referenzstruktur. Durch die vorgesehene Referenzeinrichtung zur Feststellung der Lage des Objektkoordinatensystems ist eine exakte Positionierung des Messobjekts relativ zum Messkoordinatensystem nicht notwendig, da die Lage und Ausrichtung des Objektkoordinatensystems anhand der Referenzstruktur ermittelt und mit den vom Messsystem im Messkoordinatentsystem ermittelten Konturdaten in Beziehung gebracht werden kann. Damit können auch Fehlerquellen, wie Schmutzpartikel zwischen Messobjekt und einer zur Zentrierung vorgesehenen Aufspanneinrichtung, nahezu vollständig eliminiert werden. Die Referenzstruktur kann bei unterschiedlichen Messobjekten unterschiedlich dimensioniert bzw. ausgestaltet sein, eine Erfassung der Referenzstruktur erfordert daher eine hohe Flexibilität der dafür vorgesehenen Einrichtungen. Eine Umrüstung auf andere Messobjektdimensionen kann ohne Anpassung von mechanischen Bauteilen durchgeführt werden, beispielsweise indem Positionsparameter in einer Steuerung verändert werden.

In Ausgestaltung der Erfindung wird das Messobjekt während der Vermessung durch eine Zentriereinrichtung so fixiert, dass eine Zugänglichkeit zur Referenzstruktur nicht behindert wird. Die Zentriereinrichtung ermöglicht eine ausreichend genaue und lagesichere Positionierung des Messobjekts im Erfassungsbereich des Sensorsystems. Der Erfassungsbereich kann auch als "Fangbereich" bezeichnet werden. Seine räumliche Ausdehnung kann je nach Typ des verwendeten Sensorsystems unterschiedlich sein. Der Erfassungsbereich definiert denjenigen räumlichen Bereich, innerhalb dessen ein Sensorsystem Konturdaten des Messobjekts mit ausreichender Genauigkeit erfassen kann. Durch die Fixierung wird eine zuverlässige Vermessung der Kontur des Messobjekts ermöglicht, da äußere Einflüsse wie Vibrationen oder andere mechanische Störeinflüsse, zumindest teilweise, ausgeschaltet werden können. Durch die Fixierung während der Vermessung kann verhindert werden, dass sich das Messobjekt durch äußere Einflüsse innerhalb des Erfassungsbereiches des Sensorsystems oder sogar aus dem Erfassungsbereich des Sensorsystems hinausbewegt und somit eine fehlerhafte Messung zustande kommt. Durch die Zugänglichkeit der Referenzstruktur ist eine fehlerarme Erfassung der Referenzstruktur gewährleistet, da eine unmittelbare Abtastung der Referenzstruktur, insbesondere synchron zur Erfassung der Konturen, erfolgen kann.

In weiterer Ausgestaltung der Erfindung erfolgt eine Fixierung des Messobjekts in der Messposition derart, dass die Referenzstruktur für die Feststellung der Lage des Messobjekts zugänglich ist, wobei das Messobjekt im Bezug auf eine Messobjektachse im Wesentlichen rotationsähnlich ist, die Referenzstruktur innerhalb der Außenkontur des Messobjekts im Bereich der Messobjektachse angeordnet ist und eine Zentriereinrichtung zur Zentrierung des Messobjekts an der Außenkontur des Messobjekts angreift. Durch das Angreifen der Zentriereinrichtung an der Außenkontur des Messobjekts lässt sich in einfacher Weise gewährleisten, dass die Referenzstruktur, die innerhalb der Außenkontur des Messobjekts im Bereich der Messobjektachse, z.B. zentral zu dieser, angeordnet ist, frei zugänglich für die Referenzeinrichtung zur Verfügung steht und somit die Ermittlung des Objektkoordinatensystems relativ zum Messkoordinatensystem erfolgen kann. Solche Ausführungsformen sind beispielsweise für die Vermessung von Kraftfahrzeugrädern geeignet, bei denen das Mittelloch des Rades bzw. der Felge als Referenzstruktur genutzt werden kann.

In weiterer Ausgestaltung der Erfindung ist vorgesehen, dass eine Referenzeinrichtung zur Feststellung der Lage des Objektkoordinatensystems die im Wesentlichen frei zugängliche Referenzstruktur abtastet. Durch die freie Zugänglichkeit ist eine Vermessung der Kontur und der Lage der Referenzstruktur in einfacher Weise möglich. Bei einer vorteilhaften Ausführungsform der Erfindung wird die Referenzstruktur berührungslos abgetastet. Durch eine berührungslose Abtastung, die insbesondere optisch, induktiv und/oder kapazitiv erfolgen kann, ist eine Beeinflussung der Referenzstruktur und/oder eine Veränderung der Lage des Messobjektes durch den Messvorgang nahezu ausgeschlossen, so dass eine besonders exakte Abtastung der Referenzstruktur gewährleistet ist. Eine berührungslose Abtastung ermöglicht die Erfassung einer großen Vielfalt unterschiedlicher Referenzstrukturen, die Gefahr einer wechselseitigen Beeinflussung zwischen der Referenzeinrichtung und dem Sensorsystem, die zu Ungenauigkeiten bei der Vermessung des Messobjekts führen könnte, entfällt. Bei anderen Ausführungsformen ist eine taktile Abtastung, z.B. mit Hilfe von einem oder mehreren Tastern, vorgesehen.

In weiterer Ausgestaltung der Erfindung ist vorgesehen, dass eine Referenzeinrichtung zur Feststellung der Lage des Objektkoordinatensystems eine mechanische Ausrichtung des Messobjekts anhand der Referenzstruktur vornimmt. Damit kann auch bei rauen Umgebungsbedingungen für die Vermessung des Messobjekts durch das Messsystem, insbesondere bei starken Vibrationen oder einem hohen Verschmutzungsgrad der Messumgebung, eine zuverlässige Ausrichtung des Messobjekts gegenüber dem Sensorsystem erfolgen. Damit kann das Messsystem auch in Produktionsumgebungen eingesetzt werden, bei denen eine Feststellung der Lage des Objektkoordinatensystems anhand der frei zugänglichen Referenzstruktur erschwert ist, beispielsweise bei extremen Schwingungsbelastungen oder bei hoher Verschmutzungsgefahr für berührungslos arbeitende Referenzeinrichtungen.

In einer bevorzugten Ausführungsform der Erfindung wird eine, insbesondere mechanische oder berührungslose, Vermessung der Referenzstruktur durch die Referenzeinrichtung vorgenommen, so dass neben der Lage des Objektkoordinatensystems gleichzeitig auch Information über die Kontur der Referenzstruktur, z.B. ihre Größe, Form und/oder Formabweichung von einer Sollform, zur Verfügung gestellt werden kann.

In weiterer Ausgestaltung der Erfindung ist vorgesehen, dass eine Form- und/oder Lageabweichung zumindest eines im wesentlichen orthogonal zu einer Drehachse des Sensorsystems ausgerichteten und an dem Messobjekt ausgebildeten Messobjektoberflächenabschnitts mittels des Sensorsystems und/oder der Referenzeinrichtung von einer Sollform oder Soll-Lage ermittelt wird. Der Messobjektoberflächenabschnitt kann z.B. für eine Anlage an eine Objektoberfläche vorgesehen sein. Damit wird auch die Abtastung von Bereichen des Messobjekts ermöglicht, die außerhalb der im Wesentlichen rotationsähnlichen Konturen des Messobjekts liegen, aber dennoch von großer Bedeutung für eine Qualitätsbewertung des Messobjekts sind. Der Messoberflächenabschnitt kann beispielsweise eine Auflagefläche eines Kraftfahrzeugrads gegenüber einer Radnabe sein.

In weiterer Ausgestaltung der Erfindung ist vorgesehen, dass durch eine mit dem Sensorsystem verbundene Markierungseinrichtung eine Markierung an dem Messobjekt angebracht wird. Damit kann ohne zusätzliche Verfahrensschritte bzw. Vorrichtungen unmittelbar bei der Vermessung des Messobjekts bzw. nach Ermittlung der gesamten Kontur des Messobjekts eine Markierung, insbesondere an einem charakteristischen Messpunkt, an dem Messobjekt angebracht werden. Diese Markierung, die bei Kraftfahrzeugrädern beispielsweise einen Hoch- oder Tiefpunkt bezeichnet, kann bei der Verwendung des Messobjekts für weitergehende Prozessschritte benutzt werden, insbesondere um einen Reifen ordnungsgemäß auf das Kraftfahrzeugrad aufbringen zu können.

In weiterer Ausgestaltung der Erfindung ist die Referenzeinrichtung drehbar und zumindest im Wesentlichen koaxial zu einer Drehachse des Sensorsystems angeordnet. Durch die im Wesentlichen koaxiale Anordnung zur Drehachse des Sensorsystems kann das von der Referenzeinrichtung ermittelte Objektkoordinatensystem in einfacher Weise für die Ermittlung der Kontur des Messobjekts genutzt werden. Durch eine drehbare Anbringung der Referenzeinrichtung kann auch mit einer einfachen Sensorik, die z.B. nur einen einzigen Sensor hat, eine vorteilhafte messtechnische Auflösung der abzutastenden Messobjektoberflächenabschnitte bzw. der Referenzstruktur entlang ihres gesamten Umfangs bewirkt werden.

In weiterer Ausgestaltung der Erfindung ist eine Integration des Messsystems in eine Fördereinrichtung vorgesehen. Dadurch lässt sich das Messsystem ohne größeren Flächenverbrauch und ohne Einsatz von komplexen Handhabungsgeräten, wie Robotern oder dergleichen, insbesondere in ein Lineartransportsystem integrieren. Eine zusätzliche Handhabung des Messobjekts zur Entnahme aus der Fördereinrichtung und Positionierung im Messsystem kann damit entfallen, was zu einer Reduzierung der Gefahr von Beschädigungen am Messobjekt beiträgt. Das Messsystem ist dabei vorzugsweise so an die Fördereinrichtung angepasst, dass die Fördereinrichtung das Messobjekt direkt, d.h. ohne zwischengeschaltete Manipulation, zur Messposition hin transportieren und nach der Messung aus der Messposition abtransportieren kann. Eine Förderstrecke der Fördereinrichtung kann dabei insbesondere über die Messposition geführt sein, z.B. derart geradlinig, dass das Messobjekt von einer Seite zur Messposition transportiert und an einer gegenüberliegenden Seite von der Messposition wegtransportiert wird.

In weiterer Ausgestaltung der Erfindung sind Größenerfassungsmittel für eine Grundpositionierung des Sensorsystems und/oder der Referenzeinrichtung vorgesehen. Diese können insbesondere unabhängig vom Messsystem an der Fördereinrichtung angebracht sein. Dadurch kann bereits beim Antransport des Messobjekts eine Voreinstellung des Sensorsystems und/oder der Referenzeinrichtung vorgenommen werden, so dass zu Beginn des eigentlichen Messvorgangs keine weitreichende Verstellung mehr notwendig ist. Dadurch kann die Taktzeit für einen Messzyklus reduziert werden, was insbesondere bei Massenfertigung unterschiedlich großer Messobjekte von Interesse ist.

Weitere Vorteile und Merkmale der Erfindung ergeben sich aus den Ansprüchen sowie aus der Beschreibung bevorzugter Ausführungsbeispiele, die anhand der Figuren dargestellt sind. Dabei zeigt:
- Fig. 1: in perspektivischer Darstellung ein Messsystem für Kraftfahrzeugräder,
- Fig. 2: in perspektivischer Darstellung eine an dem Messsystem gemäß Fig. 1 vorgesehene Zentriereinrichtung,
- Fig. 3: eine perspektivische Darstellung einer an dem Messsystem nach Fig. 1 vorgesehenen Referenzmesseinrichtung,
- Fig. 4: in perspektivischer Darstellung ein an dem Messsystem nach Fig. 1 vorgesehenes Sensorsystem,
- Fig. 5: in ebener Darstellung eine Schnittansicht durch ein Kraftfahrzeugrad mit schematischer Darstellung des Messsystems.

Die Erfindung wird im Folgenden beispielhaft anhand einer Ausführungsform eines Messystems erläutert, das als Rädermessmaschine 1 ausgelegt ist. Das Messsystem 1 ist insbesondere zur Vermessung von Messobjekten in Form von Kraftfahrzeugrädern 47, die bevorzugt als Umformteile aus Stahlblech oder als Guss- oder Schmiedeteile aus Aluminiumlegierungen hergestellt werden, in einer Produktionsumgebung geeignet. Dabei kann eine vollständige Vermessung aller zur Sicherung eines vorgegebenen Qualitätsniveaus abzutastenden Konturen vorgenommen werden. Eine zur Durchführung der Vermessung notwendige Zykluszeit ist dabei, unabhängig von den Größen der einzelnen Räder, so vorgebbar, dass keine Behinderung eines Materialflusses der Kraftfahrzeugräder in der Produktion stattfindet.

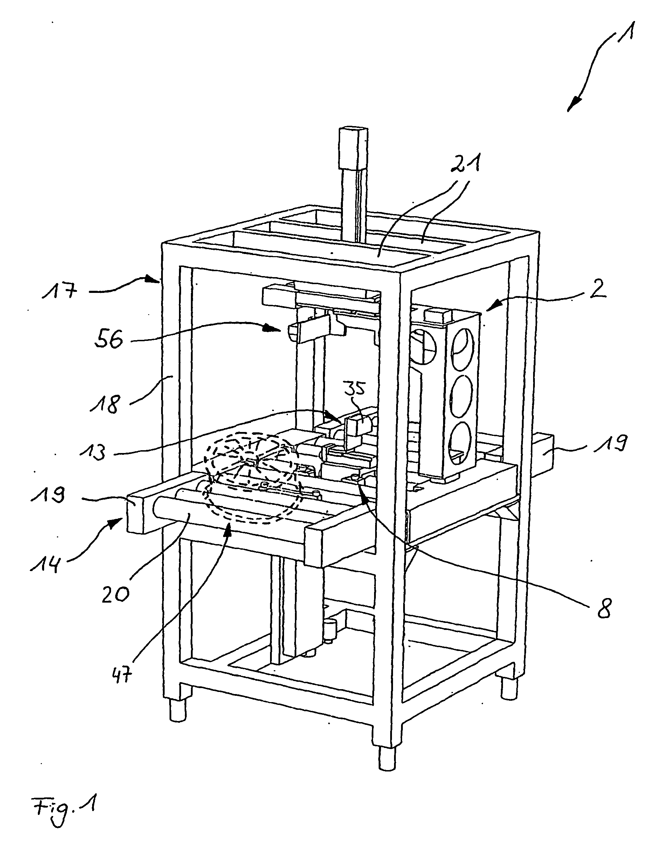

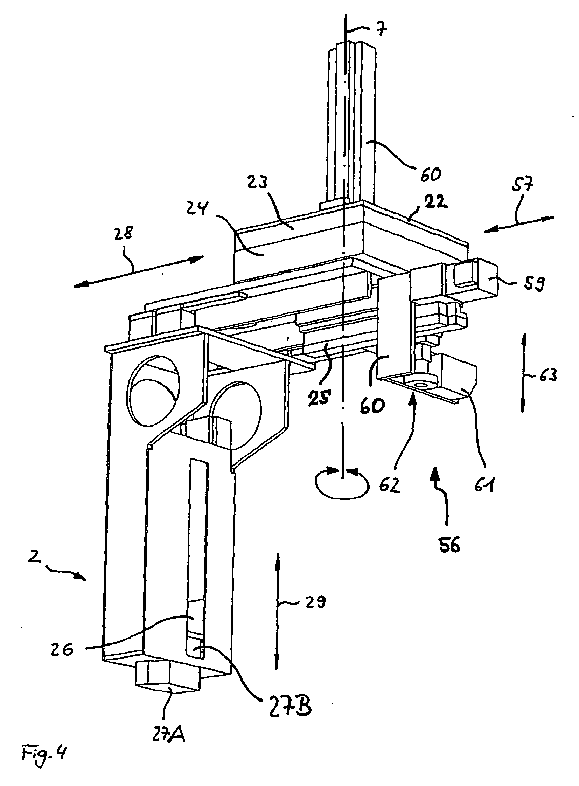

Das in Fig. 1 dargestellte Messsystem 1 weist ein an einem Gestell 17 angebrachtes Sensorsystem 2 mit Bolzenlochsensor 56, eine Zentriereinrichtung 8, eine Referenzeinrichtung 13 sowie eine Fördereinrichtung 14 auf. Das Gestell 17 ist dabei aus rechtwinklig zueinander angeordneten Metallprofilen 18 hergestellt, die miteinander zu einem festen, verwindungssteifen Rahmen verschweißt sind. Das Gestell 17 weist eine Aufstandsfläche auf einem nicht dargestellten Untergrund von ca. 1030 mm x 1030 mm auf, eine Höhenausdehnung des Gestells 17 beträgt ungefähr 2000 mm. Ungefähr auf halber Höhe des Gestells 17 ist eine Fördereinrichtung 14 angebracht, die im Wesentlichen aus zwei, mit dem Gestell 17 verbundenen, horizontalen, parallelen Führungsschienen 19 und zwischen den Führungsschienen 19 drehbar gelagerten Transportwalzen 20 aufgebaut ist. Die Transportwalzen 20 sind in der Regel motorisch angetrieben. An der Oberseite des Gestells 17 sind zwei als Quertraversen 21 ausgeführte Metallprofile vorgesehen, an deren Unterseite eine Halteplatte 22 zur Befestigung des Sensorsystems 2 (Fig. 4) angebracht ist.

Das Sensorsystem 2 ist, wie in Fig. 4 näher dargestellt, drehbar gegenüber einer mehrachsig justierbaren Befestigungsplatte 23 ausgeführt, wobei die Befestigungsplatte 23 an der Halteplatte 22 angebracht ist. Die drehbare Lagerung des Sensorsystems 2 gegenüber der Befestigungsplatte 23 wird über einen motorisch angetriebenen Drehtisch 24 verwirklicht, wobei eine Drehachse 7 des Drehtischs 24 bei Aufstellung des Messsystems 1 auf einer ebenen Unterlage im Wesentlichen vertikal verläuft. An dem Drehtisch 24 ist ein orthogonal zur Drehachse 7 verfahrbarer Linearschlitten 25 angebracht, wobei an dem bewegten Teil des Linearschlittens 25 ein nach innen zur Drehachse 7 gerichteter laseroptischer Profilsensor 27A befestigt und ein parallel zur Drehachse bewegbarer, zweiter Linearschlitten 26 vorgesehen ist. An dem zweiten Linearschlitten 26 ist ein nach innen zur Drehachse 7 gerichteter laseroptischer Profilsensor 27B befestigt, der für eine Abtastung einer Außenkontur des Messobjekts vorgesehen ist. Der Profilsensor 27B kann durch die Anbringung am zweiten Linearschlitten insgesamt in drei Achsen bewegt werden. Dabei ist eine erste Achse die Drehachse 7, eine zweite Achse wird durch den ersten Linearschlitten 25 gebildet und ist eine Horizontalschiebeachse 28, eine dritte Achse wird durch den zweiten Linearschlitten 26 gebildet und ist eine parallel zur Drehachse 7 ausgerichtete Vertikalschiebeachse 29. Sensor 27A führt nur eine Drehung um die Drehachse 7 aus und wird längs der Schiebachse 28 mit dem Linearschlitten 25 positioniert.

In Fig. 4 ist auch der Bolzenlochsensor 56 näher dargestellt, der einen laseroptischen Triangulationssensor aufweist. Er ist an dem für die Rotation des Sensorsystems 2 um die Drehachse 7 vorgesehenen Drehtisch 24 mittels eines Befestigungswinkels angebracht und weist einen Linearversteller 59 zur Bewegung in einer Radialrichtung 57 in einer Ebene orthogonal zur Drehachse sowie einen Höhenversteller 60 zur Bewegung in einer Vertikalrichtung 63 parallel zur Drehachse 7 auf. Damit kann der Bolzenlochsensor 56 auf unterschiedliche Lochkreisdurchmesser der konzentrisch um das Mittenloch 55 angeordneten Bolzenlöcher 54 eingestellt werden und zur Ermittlung einer Kontur der Bolzenlöcher 54 verwendet werden.

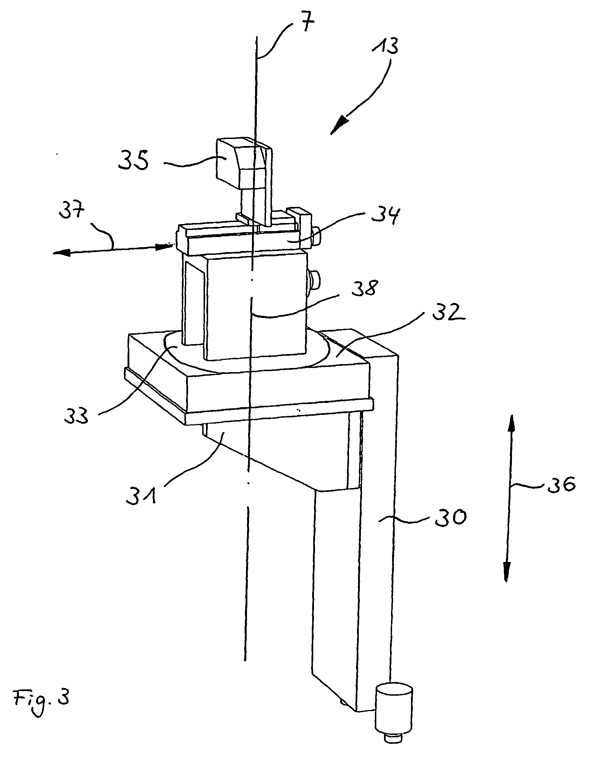

Koaxial zum Sensorsystem 2 ist in dem Messsystem 1 die in Fig. 3 näher dargestellte Referenzeinrichtung 13 vorgesehen, die über eine Hubeinheit 30 parallel zur Drehachse 7 in vertikaler Richtung verschiebbar ist, wobei die Hubeinheit 30 mittels zweier Metallprofile an dem Gestell 17 befestigt ist. Die Hubeinheit 30 weist gemäß Fig. 3 einen von der Hubeinheit verfahrbaren Tragwinkel 31 auf, auf dem ein Drehtisch 32 mit integrierter mehrachsiger Feinjustieraufnahme befestigt ist. Auf der relativ zum Tragwinkel 31 drehbaren Tischplatte 33 ist ein orthogonal zur Drehachse 7 linearbeweglicher Linearsteller 34 vorgesehen, an dem ein optisch arbeitender Messkopf 35 angebracht ist. Der Messkopf 35 kann somit gegenüber dem Gestell 17 in drei Achsen verstellt werden, dabei handelt es sich um eine im Wesentlichen zur Drehachse 7 parallele lineare Hubachse 36, um eine orthogonal zur Drehachse 7 ausgerichtete lineare Radialachse 37 sowie um eine parallel, insbesondere koaxial, zur Drehachse 7 des Sensorsystems ausgerichtete Rotationsachse 38.

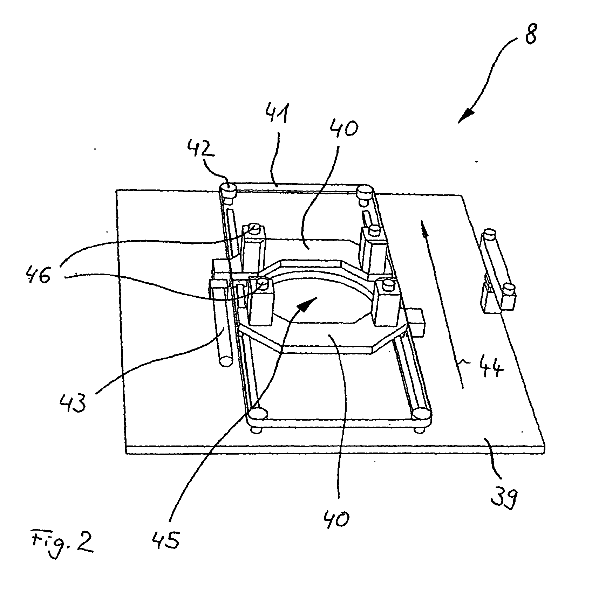

Weiterhin ist an dem Messsystem 1 eine Zentriereinrichtung 8 vorgesehen, die für eine Zentrierung des auf den Transportwalzen 20 verschiebbaren Messobjekts gegenüber dem Sensorsystem 2 und der Referenzeinrichtung 13 ausgebildet ist. Die in Fig. 2 näher dargestellte Zentriereinrichtung 8 weist zwei gegenüberliegend angeordnete, verschieblich mit einer Grundplatte 39 verbundene Zentrierschlitten 40 auf, die über einen Zahnriemen 41 kinematisch gekoppelt sind. Dazu sind an der Grundplatte 39 Riemenräder 42 zur Umlenkung des Zahnriemens vorgesehen, wobei der Zahnriemen an den Zentrierschlitten 40 jeweils seitlich angebracht ist. Einer der Zentrierschlitten 40 kann mittels eines Pneumatikzylinders 43 linear verschoben werden, wobei eine Verschieberichtung 44 orthogonal zur Drehachse 7 vorgesehen ist. Bedingt durch die kinematische Kopplung der Zentrierschlitten 40 über den Zahnriemen 41 führt der gegenüberliegend angeordnete Zentrierschlitten 40 eine entgegengesetzte Bewegung längs der Verschieberichtung durch. Somit kann in einfacher Weise eine Zentrierung des Messobjekts durch Verschieben der Zentrierschlitten 40 erzielt werden. In der Grundplatte 39 ist eine Mittenausnehmung 45 vorgesehen, durch die, wie in Fig. 1 dargestellt, die Referenzeinrichtung 13 in vertikaler Richtung nach oben verschoben werden kann, um z.B. eine Innenkontur und/oder eine Referenzstruktur des nicht dargestellten Messobjekts zu erfassen.

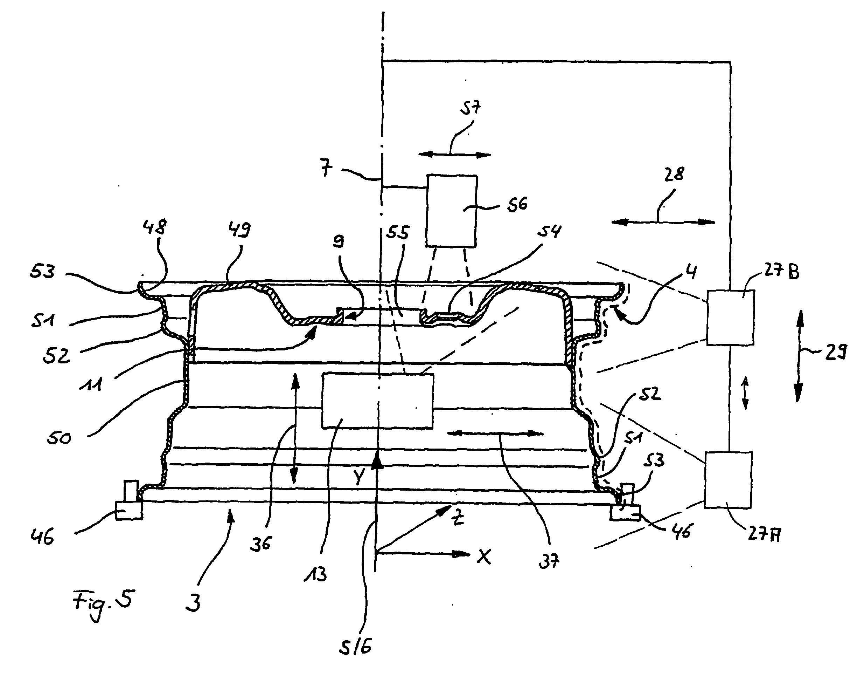

Bei dem in Fig. 5 schematisch dargestellten Messobjekt 47 handelt es sich um ein Kraftfahrzeugrad, das aus einer Felge 48 und einer Radschüssel 49 aufgebaut ist. Für die Beurteilung der Fertigungsqualität eines derartigen Kraftfahrzeugrads 47 ist insbesondere die radial nach außen weisende Kontur 4 bzw. Oberflächenkontur der Felge 48 zu betrachten, deren einzelne, aneinandergrenzende Geometriebereiche nachfolgend kurz vorgestellt werden sollen.

In einem Bereich eines minimalen Durchmessers weist die Felge 48 ein Felgenbett 50 auf, von dem aus sich jeweils in axialer Richtung betrachtet ein sogenannter Felgenhump 52 anschließt, der einen Übergang zu einer Felgenschulter 51 bildet, in der nach Aufziehen eines Reifens eine Kontaktfläche mit dem Reifen vorgesehen ist und die nach außen durch ein Felgenhorn 53 abgeschlossen wird. Im Inneren der Felge befindet sich auf einer Innenseite des Felgenbettes 50 eine Radschüssel 49, die ein in axialer Richtung 9 gebrachtes Mittenloch 55 sowie konzentrisch um das Mittenloch verteilte Bolzenlöcher 54 aufweist. Das Mittenloch 55 tritt bei einer Montage des Kraftfahrzeugrads 47 mit einem als Zentrierdorn ausgeführten Abschnitt einer nicht dargestellten Radaufnahme in formschlüssige Verbindung und bestimmt somit die Rotationsachse des Kraftfahrzeugrads 47. Das Mittenloch 55 dient als Referenzstruktur zur Definition des objektfesten Objektkoordinatensystems 6, dessen y-Achse durch die Zentralachse des Mittenlochs definiert ist. Das Mittenloch ist von einem ringförmigen Abschnitt der Radschüssel 49 umgeben, deren dem Felgeninneren zugewandte Seite einen auch unterbrochenen Messobjektoberflächenabschnitt 11 bildet, der nach Montage des Rades fest an die Außenseite der Radaufnahme gespannt ist. Dieser ringförmige Abschnitt definiert die x-y Referenzebene des Messobjektes. Die Referenzstruktur dient auch zur Ermittlung der Lage der Bolzenlöcher 54 sowie zur Ermittlung der Kontur der Felge 48, die mittels des erfindungsgemäßen Messsystems ermittelt werden kann.

Die für die Konturermittlung eingesetzten Messmittel sind in Fig. 5 schematisch eingezeichnet. Dabei ist das Sensorsystem 2 mit den optischen Sensoren 27A/27B zur Ermittlung der nach außen weisenden Oberflächenkontur der Felge 48 vorgesehen. Dazu ist es längs der Horizontalschiebeachse 28 in Radialrichtung zur Rotationsachse 7 und entlang der Vertikalschiebeachse 29 verstellbar und um die Drehachse 7 drehbar gegenüber dem Kraftfahrzeugrad 47 an dem schematisch dargestellten Gestell angebracht. Der Axialabstand der Sensoren 27A/27B ist verstellbar. Zur Abtastung der Oberflächenkontur sind die Sensoren 27A/27B des Sensorsystems 2 als laseroptische Triangulationssysteme ausgeführt, so dass sie eine berührungslose Abtastung der Oberfläche durchführen können.

Die in einen Innenbereich der Felge 48 einfahrbare, zur berührungslosen Abtastung der Referenzstruktur 9 und des Messobjektoberflächenabschnitts 11 vorgesehene Referenzeinrichtung 13 ist dazu längs der linearen Hubachse 36 und der linearen Radialachse 37 verschiebbar und ebenfalls um die Drehachse 7 relativ zur Felge 48 drehbar. Die Referenzeinrichtung ist durch den Messkopf 35 ebenfalls als laseroptisches Triangulationssystem ausgeführt, so dass eine vollständig berührungslose Abtastung der Kontur des Kraftfahrzeugrads 47 gewährleistet ist. Mit dem Messkopf 35 wird gleichzeitig das Mittelloch 55, die Position der Bolzenlöcher 54 und die ringförmige Auflagefläche in der Randschüssel 49 erfasst.

Des weiteren ist an dem Messsystem ein optischer Bolzenlochsensor 56 vorgesehen, der in Radialrichtung 57 verschiebbar ist, um eine Anpassung auf unterschiedliche Bolzenlochkreise zu ermöglichen. Der Bolzenlochsensor 56 ist in Axialrichtung auf verschiedene Radbreiten einstellbar.

Das Kraftfahrzeugrad 47 ist während des Messvorgangs durch die Halteklammern 46 zentriert und ruht etwas oberhalb der nicht dargestellten Fördereinrichtung, um eine eindeutige Lage gegenüber dem Messsystem einnehmen zu können. Bei der in Fig. 5 dargestellten Messsituation ist das Messkoordinatensystem 5 im Wesentlichen übereinstimmend mit dem Objektkoordinatensystem 6 angeordnet, geringfügige Abweichungen können durch die Referenzeinrichtung 13 anhand der Abtastung der Referenzstruktur 9 ermittelt werden und in Korrelation mit den von dem Sensorsystem 2 erzeugten Abtastwerten für die Außenfläche der Felge 48 gebracht werden.

Für eine Vermessung eines rotationsähnlichen Messobjekts, das auf der Fördereinrichtung 14 in einer im Wesentlichen geradlinigen Bewegung längs der Führungsschiene 19 in das Messsystem 1 transportiert werden kann, werden zunächst das Sensorsystem 2 und die Referenzeinrichtung 13 jeweils in eine Ausgangsposition gebracht. Dabei ist die Ausgangsposition des Sensorsystems 2 durch einen maximalen radialen Abstand der Profilsensoren 27A/27B zum Drehtisch 24 gekennzeichnet, während die Ausgangsposition der Referenzeinrichtung 13 durch eine maximale Entfernung des Messkopfes 35 vom Drehtisch 24 des Sensorsystems 2 bestimmt ist.

Die Zentrierschlitten 40 der Zentriereinrichtung 8 sind in der Ausgangsposition maximal voneinander entfernt und erlauben durch gegenseitige Annäherung eine Zentrierung des Messobjekts. Diese Zentrierung findet statt, sobald das Messobjekt mittels der Fördereinrichtung 14 von der in Fig. 1 nach vorne weisenden Eintrittsseite in das Innere des Messsystems 1 in einen Erfassungsbereich der Zentriereinrichtung 8 transportiert wurde. Dabei werden die Zentrierschlitten 40 mit Hilfe des Pneumatikzylinders 43 und des Zahnriemens 41 aufeinander zugefahren und greifen mit ihren Halteklammern 46 das Messobjekt an seiner Außenkontur. Bei symmetrischen Messobjekten wird durch die symmetrische Anordnung der Halteklammern 46 an dem Zentrierschlitten 40 eine Ausrichtung einer Symmetrieachse des Messobjekts im Wesentlichen konzentrisch zu der Drehachse 7 des Sensorsystems 2 hervorgerufen. Eine exakte Zentrierung zum Messkoordinatensystems ist jedoch nicht erforderlich.

Sobald das Messobjekt durch die Zentriereinrichtung 8 in den Erfassungsbereich des Meßsystems eingebracht und ausgerichtet ist, können das Sensorsystem 2 und die Referenzeinrichtung 13 aus ihrer Ausgangsposition in eine Funktionsposition verschoben werden. In der Funktionsposition sind die Profilsensoren 27A/27B und der Messkopf 35 derart gegenüber dem Messobjekt beabstandet, dass sie eine berührungslose, optische Konturerfassung des Messobjekts durchführen können, ohne Gefahr zu laufen, das Messobjekt aus ihrem Erfassungsbereich zu verlieren oder mechanisch mit dem Messobjekt zu kollidieren. Mittels eines nicht dargestellten Größernerfassungsmittels, dass vor der Messposition vorgesehen werden kann, können Daten zur Voreinstellung des Sensorsystems 2 und der Referenzeinrichtung 13 zur Verfügung gestellt werden.

Für den Messvorgang zur Erfassung der Konturen des Messobjekts findet eine Rotation der am Sensorsystem 2 vorgesehenen Profilsensoren 27A und 27B um die Drehachse 7 statt. Dabei tasten die Profilsensoren 27A und 27B die Kontur sukzessive in Abtastebenen ab, die jeweils in radialer Richtung durch die Drehachse 7 verlaufen . Der Messkopf 35 erfasst in ähnlicher Weise die Referenzstruktur 9, indem er um die Drehachse 38 rotiert wird. Eine winkelgenaue Zuordnung von zugehörigen Abtastebenen des Profilsensors 27 und des Messkopfs 35 wird ermöglicht durch jeweils mit diesen Messeinrichtungen gekoppelte, nicht dargestellte Winkelsensoren, die derart aufeinander abgestimmt sind, dass gleichen Winkellagen gegenüber dem Messobjekt gleiche Winkel zugeordnet werden. Dadurch kann eine eindeutige Zuordnung von Abtastebenen der Profilsensoren 27A und 27B zu Abtastebenen des Messkopfs 35 erfolgen. Eine synchrone Bewegung der beiden Messsysteme ist möglich, aber nicht notwendig. Sobald das Sensorsystem 2 eine vollständige Umdrehung um die Drehachse 7 vollzogen hat, kann mit einer nicht dargestellten Auswerteeinrichtung eine Konturermittlung des Messobjekts anhand der ermittelten Konturdaten des Sensorsystems 2, des Bolzenlochsensors 56 und der Referenzeinrichtung 13 durchgeführt bzw. vervollständigt werden. Als Ergebnis der Konturermittlung wird eine datentechnische Repräsentation der Kontur des Messobjekts im Messkoordinatensystem erzeugt, die anhand der ermittelten Position des Objektkoordinatensystems in das Objektkoordinatensystem transformiert werden kann.

Durch Vergleich mit vorgebbaren, in der Auswerteinrichtung enthaltenen Referenzkonturen kann eine Ist-Soll-Abweichung ermittelt werden. Liegt eine Ist-Kontur des Messobjekts in einem Toleranzbereich einer Referenzkontur, so kann eine Maximal- oder Minimalabweichung von der Referenzkontur ermittelt werden, die für eine spätere Verwendung des Messobjekts von Bedeutung sein kann. Um diese Maximal- oder Minimalabweichung zu kennzeichnen, kann an dem Sensorsystem 2 und/oder an der Referenzeinrichtung 13 eine nicht dargestellte Markierungseinrichtung vorgesehen werden, die durch neuerliches Abfahren der Kontur des Messobjekts bis an die Position der Maximal- oder Minimalabweichungsstelle eine entsprechende Markierung, insbesondere durch Farbauftrag, Anbringen eines Aufklebers oder Ankörnen des Messobjekts, vornehmen kann. Anschließend werden das Sensorsystem und die Referenzeinrichtung 13 wieder in ihre Ausgangsposition verfahren, die Zentriereinrichtung 8 löst die Fixierung des Messobjekts mittels der Zentrierschlitten 40 und das Messobjekt kann mittels antreibbarer Transportwalzen 20 aus dem Messsystem 1 in im Wesentlichen geradliniger Bewegung entfernt werden.

Bei dem neuartigen Konzept dieser Rädermessmaschine wird anstelle des Rades die Messsensorik um das festgehaltene Radius herumgedreht. Dies bringt eine Reihe entscheidender Vorteile gegenüber herkömmlichen Rädermesssystemen.

Das Rad bleibt während der Messung in der Messeinrichtung stehen und wird beispielsweise mittels der erläuterten 4-Rollen-Zentriereinrichtung, typischerweise anliegend am inneren Horn, in der Messposition gehalten. Weil auf eine Drehung des Messobjektes während der Messung verzichtet wird, gehen der Einfluss von Radgewicht und Raddimensionen nicht in das dynamische Verhalten des Messgerätes bzw. des Messvorganges ein.

Die Zentriereinrichtung hat keine hohen Genauigkeitsanforderungen. Sie kann daher relativ einfach aufgebaut sein und den Zentrierprozess schnell durchführen. Sie muss lediglich das Rad im Fangbereich (Erfassungsbereich) der Sensoren positionieren und während der Messung das Rad fixieren, um den Einfluss von Erschütterungen und Akustikanregungen im Produktionsumfeld auf den Messvorgang auszuschalten. Die Spannkräfte der Zentriereinrichtung können sehr klein gehalten werden und werden typischerweise so eingestellt, dass eine die Messung beeinflussende Verformung des inneren Horns nicht auftritt.

Das dynamische Verhalten der Sensorik und damit des Messvorganges ist weitgehend konstant bzw. weitgehend unabhängig von den Raddimensionen. Da die Raddimensionen die Messung nicht beeinflussen, ist die Zykluszeit der Messung weitgehend unabhängig von Raddimensionen und Radgewichten. Die Sensoren benötigen keine Freifahrbewegung. Beim Be- und Entladen werden sie lediglich in eine Position bewegt, die außerhalb der Störkontur der Förderbewegung liegt.

Die als Referenzstruktur dienende Nabenbohrung (Mittelloch) bleibt während der gesamten Vermessung für die Messung frei zugänglich. Die Referenz wird nicht durch mechanische Anlageflächen gebildet, sondern mit Sensoren direkt an der Auflagefläche und in der Nabenbohrung gemessen. Damit kann eine ungenaue oder schräge Fixierung einfach kompensiert werden.

Es kann sowohl für das Sensorsystem, als auch für die Referenzeinrichtung jede Art von Sensorik (taktil oder berührungslos, z.B. optisch, induktiv, kapazitiv) eingesetzt werden. Die Vermessung der Referenzstruktur kann durch einen feststehenden Mehrstellenmesskopf oder, wie im Ausführungsbeispiel, durch eine ebenfalls rotierende Messeinheit erfolgen.

Die Ebenheit der Nabenauflagefläche 11, die ein wichtiges Kriterium für die Sicherheit der Befestigung auf der Nabe und für die Güte des Seitenschlages ist, kann mit Hilfe der Sensorik der Referenzeinrichtung direkt gemessen werden. Hierfür ist keine gesonderte Messeinrichtung notwendig, so dass diese wichtigen Daten quasi als "Abfallprodukt" der Referenzmessung ermittelbar sind. Durch Anbau weiterer Sensoren an der dem Sensorsystem 2 und/oder der Referenzeinrichtung 13 können weitere Konturmerkmale wie eine Wandstärke am inneren Horn oder im Tiefbett durch Verrechnung mit den Daten der Sensoren 27A/27B bzw. ein Bremssattelfreigang durch entsprechendes Positionieren des Sensors 35 ermittelt werden. Mit dem Bolzenlochsensor 56 kann auch eine Anschlussgeometrie für eine Staubkappe ermittelt werden. Da die Referenz gemessen wird, spielen eventuelle Verschmutzungen an der Fixierung des Rades am inneren Horn keine Rolle.

Das gesamte Spektrum von in der Praxis vorkommenden Radgrößen, beispielsweise von 13" bis 24,5" Durchmesser, von 3,5" bis 17" Maulweite, von 52 bis 281 mm Nabebohrungsdurchmesser und/oder von ca. 5 bis ca. 70 kg Gewicht wird ausschließlich durch Einstellung der Sensoren mit Positioniereinheiten ausschließlich über Änderung von deren Positionsparametern zugänglich. Mechanische Anpassungen oder Umbauten sind nicht erforderlich. Das Messsystem bleibt für alle Arten von Rädern das Gleiche. Selbstverständlich sind auch Dimensionen außerhalb der beispielhaft angegebenen Bereiche vermessbar.

Das Konzept des Messsystems erlaubt eine Integration in bereits vorhandene Fördertechnik, indem beispielsweise ein Förderband oder dergleichen zum Antransport des Messobjekts in die Messposition und nach der Messung zum Abtransport aus der Messposition genutzt werden kann. Zur Integration der kompakten Messeinrichtung wird nur ein Abschnitt der Förderlänge in der Größenordnung von einem Meter benötigt. Insgesamt ist die Standfläche (footprint) der Messeinrichtung sehr gering, so dass auch in annähernd voll genutzten Produktionsräumen die Integration prozessnaher Messtechnik möglich wird. Selbstverständlich kann die Be- und Entladung der Messeinrichtung auch mit ,Pick- and Place'-Systemen oder Robotersystemen erfolgen, die die Räder beispielsweise im Tiefbett oder flach über dem äußeren Horn greifen können. Durch die Integration der Matchpunktmarkierung am Sensorsystem können gesonderte Manipulatoren für die Matchpunktmarkierung entfallen. Bereits vorhandene Einstellmeister (Kalibriernormale) können weiter verwendet werden. Diese beispielhaft erwähnten Eigenschaften zeigen, dass im Rahmen der Erfindung Konzepte möglich sind, die höchste Flexibilität und Funktionsumfang bezüglich Messfunktion und Integration in die Produktionsumgebung bieten.

## Patentansprüche

1. Verfahren zur Vermessung eines Messobjekts (3), das zumindest eine Referenzstruktur (9) zur Definition eines objektfesten Objektkoordinatensystems (6) aufweist, mit Hilfe eines Messsystems (1), das mindestens ein Sensorsystem (2) zur Erfassung einer Kontur (4) des Messobjekts in einem Messkoordinatensystem (5) umfasst, mit den Schritten:
- Positionieren des Messobjektes in einer Messposition im Erfassungsbereich des Sensorsystems,
- Feststellen der Lage des Objektkoordinatensystems anhand der Referenzstruktur,
- Verknüpfen des Objektkoordinatensystems mit dem Messkoordinatensystem,
- Drehung des Sensorsystems um eine Drehachse (7) relativ zum Messobjekt zur Ermittlung von Konturdaten,
- Verarbeitung der Konturdaten unter Berücksichtigung der Lage des Objektkoordinatensystems in einer Auswerteeinheit,
**dadurch gekennzeichnet, dass** das Sensorsystem bei der Drehung um die Drehachse (7) um das Messobjekt herumgedreht wird.

2. Verfahren nach Anspruch 1, **dadurch gekennzeichnet, dass** das Sensorsystem um eine Drehachse (7) gedreht wird, die vom Umfang des Messobjektes eingeschlossen ist.

3. Verfahren nach Anspruch 1 oder 2, **dadurch gekennzeichnet, dass** die Vermessung eine vollständige Umdrehung des Sensorsystems um die Drehachse umfasst.

4. Verfahren nach einem der vorhergehenden Ansprüche, **dadurch gekennzeichnet, dass** das Messobjekt während der Vermessung ruht.

5. Verfahren nach einem der vorhergehenden Ansprüche, **dadurch gekennzeichnet, dass** das Messobjekt während der Vermessung durch eine Zentriereinrichtung (40) so fixiert wird, dass eine Zugänglichkeit zur Referenzstruktur nicht behindert wird.

6. Verfahren nach Anspruch 5, **dadurch gekennzeichnet, dass** eine Fixierung des Messobjekts in der Messposition derart vorgesehen ist, dass die Referenzstruktur für die Feststellung der Lage des Messobjekts zugänglich ist, wobei das Messobjekt im Bezug auf eine Messobjektachse im wesentlichen rotationsähnlich ist, die Referenzstruktur innerhalb der Außenkontur des Messobjekts im Bereich der Messobjektachse angeordnet ist und eine Zentriereinrichtung zur Zentrierung des Messobjekts an der Außenkontur des Messobjekts angreift.

7. Verfahren nach Anspruch 5, **dadurch gekennzeichnet, dass** eine Referenzeinrichtung (13) zur Feststellung der Lage des Objektkoordinatensystems die im wesentlichen frei zugängliche Referenzstruktur abtastet, wobei vorzugsweise die Referenzeinrichtung (13) die im Wesentlichen frei zugängliche Referenzstruktur berührungslos abtastet.

8. Verfahren nach Anspruch 1, **dadurch gekennzeichnet, dass** eine Referenzeinrichtung zur Feststellung der Lage des Objektkoordinatensystems eine mechanische Ausrichtung des Messobjekts anhand der Referenzstruktur vornimmt, wobei insbesondere eine Vermessung der Referenzstruktur stattfindet.

9. Verfahren nach einem der vorhergehenden Ansprüche, **dadurch gekennzeichnet, dass** eine Form- und/oder Lageabweichung zumindest eines, für eine Anlage an einer Objektoberfläche vorgesehenen, im wesentlichen orthogonal zu einer Drehachse des Sensorsystems ausgerichteten und an dem Messobjekt ausgebildeten Messobjektoberflächenabschnitts (11) mittels des Sensorsystems und/oder der Referenzeinrichtung ermittelt wird.

10. Verfahren nach einem der vorhergehenden Ansprüche, **dadurch gekennzeichnet, dass** durch eine mit dem Sensorsystem verbundene Markierungseinrichtung eine Markierung an dem Messobjekt angebracht wird, die insbesondere einen charakteristischen Messpunkt kennzeichnet.

11. Verfahren nach einem der vorhergehenden Ansprüche, **dadurch gekennzeichnet, dass** ein Transport des Messobjektes im wesentlichen geradlinig zwischen einer Einfuhröffnung und einer Ausfuhröffnung des Messsystems, vorzugsweise senkrecht zur Drehachse des Sensorsystems, erfolgt.

12. Verfahren nach einem der vorhergehenden Ansprüche, **dadurch gekennzeichnet, dass** Messdaten des Sensorsystems mit Messdaten der Referenzeinrichtung zur Ermittlung von Wandstärken verknüpft werden.

13. Vorrichtung zur Vermessung eines Messobjekts, das zumindest eine Referenzstruktur zur Definition eines objektfesten Objektkoordinatensystems aufweist, mit:
einem Messsystem, das mindestens ein Sensorsystem zur Erfassung einer Kontur des Messobjekts in einem Messkoordinatensystem aufweist, und
einer Referenzeinrichtung zur Feststellung der Lage des Objektkoordinatensystems anhand der Referenzstruktur
wobei das Sensorsystem drehbeweglich gegenüber dem Messobjekt gelagert ist,
**dadurch gekennzeichnet, dass** das Sensorsystem derart um eine Drehachse (7) drehbar ist, dass das Sensorsystem bei einer Drehung um die Drehachse um das Messobjekt herum drehbar ist.

14. Vorrichtung nach Anspruch 13, **dadurch gekennzeichnet, dass** die Drehachse (7) vom Umfang des Messobjekts eingeschlossen ist.

15. Vorrichtung nach Anspruch 13 oder 14, **dadurch gekennzeichnet, dass** das Sensorsystem vollständig um das Messobjekt herum drehbar ist.

16. Vorrichtung nach Anspruch 13, 14, oder 15, **dadurch gekennzeichnet, dass** eine Zentriereinrichtung für eine Positionierung und/oder Fixierung des Messobjekts in der Messposition vor und/oder während der Vermessung vorgesehen ist.

17. Vorrichtung nach Anspruch 13, 14, 15 oder 16, **dadurch gekennzeichnet, dass** die Referenzeinrichtung für eine berührungslose Abtastung der Referenzstruktur eingerichtet ist.

18. Vorrichtung nach Anspruch 13, **dadurch gekennzeichnet, dass** die Referenzeinrichtung für eine mechanische Zentrierung des Messobjekts anhand der Referenzstruktur ausgebildet ist.

19. Vorrichtung nach einem der Ansprüche 13 bis 18, **dadurch gekennzeichnet, dass** das Sensorsystem und/oder die Referenzeinrichtung zur Ermittlung einer Ebenheit und/oder Ausrichtung eines an dem Messobjekt vorgesehenen, im wesentlichen orthogonal zu einer Drehachse des Sensorsystems ausgerichteten und zur Anlage an eine Objektoberfläche ausgebildeten Messobjektoberflächenabschnitts vorgesehen ist.

20. Vorrichtung nach einem der Ansprüche 13 bis 19, **dadurch gekennzeichnet, dass** an dem Sensorsystem und/oder der Referenzeinrichtung eine Markierungseinrichtung zur Anbringung einer Markierung an dem Messobjekt vorgesehen ist.

21. Vorrichtung nach einem der Ansprüche 13 bis 20, **dadurch gekennzeichnet, dass** die Referenzeinrichtung drehbar und zumindest im wesentlichen koaxial zu einer Drehachse des Sensorsystems angeordnet ist.

22. Vorrichtung nach einem der Ansprüche 13 bis 21, **dadurch gekennzeichnet, dass** eine Integration in eine Fördereinrichtung (14), insbesondere in ein Lineartransportsystem, vorgesehen ist.

23. Vorrichtung nach einem der Ansprüche 13 bis 22, **dadurch gekennzeichnet, dass** Größenerfassungsmittel für eine Grundpositionierung des Sensorsystems und/oder der Referenzeinrichtung vorgesehen sind.

## Claims

1. Method for measuring a measurement object (3) having at least one reference structure (9) for defining an object-fixed object coordinate system (6), with the aid of a measuring system (1) comprising at least one sensor system (2) for recording a contour (4) of the measurement object in a measurement coordinate system (5), with the following steps:
- positioning the measurement object in a measurement position in the coverage range of the sensor system,
- establishing the position of the object coordinate system by means of the reference structure,
- linking the object coordinate system with the measurement coordinate system,
- rotating the sensor system about a rotation axis (7) relative to the measurement object for determining contour data,
- processing the contour data, whilst taking account of the position of the object coordinate system in an evaluation unit,
**characterized in that** on rotation about rotation axis (7) the sensor system is rotated around the measurement object.

2. Method according to claim 1, **characterized in that** the sensor system is rotated about a rotation axis (7) enclosed by the circumference of the measurement object.

3. Method according to claim 1 or 2, **characterized in that** the measurement comprises a complete rotation of the sensor system around the rotation axis.

4. Method according to one of the preceding claims, **characterized in that** the measurement object rests during the measurement.

5. Method according to one of the preceding claims, **characterized in that**, during the measurement, the measurement object is so fixed by a centring device (40) that accessibility to the reference structure is not impeded.

6. Method according to claim 5, **characterized in that** the measurement object is fixed in the measurement position in such a way that the reference structure is accessible for establishing the measurement object position, the measurement object being substantially rotation-like with respect to a measurement object axis, the reference structure is positioned within the outer contour of the measurement object in the vicinity of the measurement object axis and a centring device for centring the measurement object acts on the outer contour of the measurement object.

7. Method according to claim 5, **characterized in that** a reference device (13) for establishing the position of the object coordinate system scans the substantially freely accessible reference structure and preferably the reference device (13) scans in noncontacting manner the substantially freely accessible reference structure.

8. Method according to claim 1, **characterized in that** a reference device performs a mechanical orientation of the measurement object by means of the reference system for establishing the position of the object coordinate system and in particular the reference structure is measured.

9. Method according to one of the preceding claims, **characterized in that** a shape and/or position variation of at least one measurement object surface portion (11) provided for engagement on an object surface, oriented substantially orthogonally to a rotation axis of the sensor system and formed on the measurement object is determined by means of the sensor system and/or reference device.

10. Method according to one of the preceding claims, **characterized in that** a marking is made on the measurement object more particularly defining a characteristic measurement point by a marking device connected to the sensor system.

11. Method according to one of the preceding claims, **characterized in that** the measurement object is conveyed substantially linearly between an insertion opening and a discharge opening of the measurement system, preferably perpendicular to the sensor system rotation axis.

12. Method according to one of the preceding claims, **characterized in that** measurement data of the sensor system are linked with measurement data of the reference device for determining wall thicknesses.

13. Device for measuring a measurement object having at least one reference structure for defining an object-fixed object coordinate system having a measuring system with at least one sensor system for recording a contour of the measurement object in a measurement coordinate system and a reference device for establishing the position of the object coordinate system with the aid of the reference structure, the sensor system being mounted in a rotary manner relative to the measurement object, **characterized in that** the sensor system is rotatable about a rotation axis (7) in such a way that, on rotation about the rotation axis, the sensor system is rotatable around the measurement object.

14. Device according to claim 13, **characterized in that** the rotation axis (7) is enclosed by the circumference of the measurement object.

15. Device according to claim 13 or 14, **characterized in that** the sensor system is completely rotatable around the measurement object.

16. Device according to claim 13, 14 or 15, **characterized in that** there is a centring device for a positioning and/or fixing of the measurement object in the measurement position before and/or during measurement.

17. Device according to claim 13, 14, 15 or 16, **characterized in that** the reference device is set up for a noncontacting reference structure scanning.

18. Device according to claim 13, **characterized in that** the reference device is constructed for mechanically centring the measurement object with the aid of the reference structure.

19. Device according to one of the claims 13 to 18, **characterized in that** the sensor system and/or reference device is provided for determining the flatness and/or orientation of a measurement object surface portion provided on the measurement object, oriented substantially orthogonally to a rotation axis of the sensor system and constructed for engagement on an object surface.

20. Device according to one of the claims 13 to 19, **characterized in that** a marking device for making a marking on the measurement object is provided on the sensor system and/or reference device.

21. Device according to one of the claims 13 to 20, **characterized in that** the reference device is arranged in rotary manner substantially coaxially to a rotation axis of the sensor system.

22. Device according to one of the claims 13 to 21, **characterized in that** integration takes place into a conveying device (14), particularly a linear conveying system.

23. Device according to one of the claims 13 to 22, **characterized in that** there are size determination means for a basic positioning of the sensor system and/or reference device.

## Revendications

1. Procédé pour le mesurage d'un objet à mesurer (3) présentant au moins une structure de référence (9) pour la définition d'un système de coordonnées d'objet (6) immobile par rapport à l'objet, au moyen d'un système de mesure (1), qui comprend au moins un système de détection (2) pour la détection d'un contour (4) de l'objet à mesurer dans un système de coordonnées de mesure (5), avec les étapes suivantes :
- placer l'objet à mesurer en position de mesure dans le domaine de détection du système de détection,
- déterminer la position du système de coordonnées d'objet à l'aide de la structure de référence,
- établir un lien entre le système de coordonnées d'objet et le système de coordonnées de mesure,
- rotation du système de détection autour d'un axe (7) par rapport à l'objet à mesurer pour évaluer des données définissant le contour,
- traitement des informations concernant le contour en tenant compte de la position du système de coordonnées d'objet dans une unité d'évaluation,
**caractérisé en ce que** le système de détection est tourné autour de l'objet à mesurer pendant la rotation autour de l'axe (7).

2. Procédé d'après la revendication 1, **caractérisé en ce que** le système de détection est tourné autour d'un axe (7), qui est compris dans le périmètre de l'objet à mesurer.

3. Procédé d'après la revendication 1 ou 2, **caractérisé en ce que** le mesurage comprend un tour complet du système de détection autour de l'axe de rotation.

4. Procédé d'après une des revendications précédentes, **caractérisé en ce que** l'objet à mesurer est immobile pendant le mesurage.

5. Procédé d'après une des revendications précédentes, **caractérisé en ce que** pendant la mesure l'objet à mesurer est fixé par un dispositif de centrage (40), de manière que l'accessibilité à la structure de référence n'est pas entravée.

6. Procédé d'après la revendication 5, **caractérisé en ce qu'**une fixation de l'objet à mesurer est prévue de telle manière, que la structure de référence reste accessible pour constater la position de l'objet à mesurer, sachant que l'objet à mesurer par rapport à un axe d'objet à mesurer est essentiellement similaire du point de vue de la rotation, que la structure de référence est disposée à l'intérieur du contour extérieur de l'objet à mesurer dans le domaine de l'axe d'objet à mesurer et qu'un dispositif de centrage pour le centrage de l'objet à mesurer s'engage au contour extérieur de l'objet à mesurer.

7. Procédé d'après la revendication 5, **caractérisé en ce qu'**un dispositif de référence (13) scanne la structure de référence en substance librement accessible pour déterminer la position du système de coordonnées d'objet, sachant que de préférence le dispositif de référence (13) scanne la structure de référence en substance librement accessible, sans contact direct.

8. Procédé d'après la revendication 1, **caractérisé en ce qu'**un dispositif de référence effectue un ajustage mécanique de l'objet à mesurer à l'aide de la structure de référence pour déterminer la position du système de coordonnées d'objet, sachant que un mesurage de la structure de référence a notamment lieu.

9. Procédé d'après une des revendications précédentes, **caractérisé en ce que** par un système de détection et/ou par le dispositif de référence on détermine une aberrance de position et/ou de forme d'au moins une section de surface d'objet à mesurer (11), prévue pour le placement auprès d'une surface d'objet, essentiellement orthogonal par rapport à l'axe de rotation du système de détection et réalisé sur l'objet à mesurer.

10. Procédé d'après une des revendications précédentes, **caractérisé en ce que** par un dispositif de marquage raccordé au système de détection on applique une marque de repère sur l'objet à mesurer, qui définit notamment un point de mesure caractéristique.

11. Procédé d'après une des revendications précédentes, **caractérisé en ce qu'**un transport de l'objet à mesurer est effectué de manière essentiellement rectiligne entre une ouverture d'accès et une ouverture de sortie dans le système de mesure, de préférence de façon orthogonale par rapport à l'axe de rotation du système de détection.

12. Procédé d'après une des revendications précédentes, **caractérisé en ce qu'**on établie une connexion entre des données de mesure du système de détection et des données de mesure du dispositif de référence pour calculer des épaisseurs de paroi.

13. Dispositif pour le mesurage d'un objet à mesurer présentant au moins une structure de référence pour la définition d'un système de coordonnées d'objet immobile par rapport à l'objet, avec :
un système de mesure, qui présente au moins un système de détection pour la détection du contour d'un objet à mesurer dans un système de coordonnées de mesure, et
un dispositif de référence pour déterminer la position du système de coordonnées d'objet à l'aide de la structure de référence,
sachant que le système de détection est logé de manière à pouvoir effectuer un mouvement de rotation par rapport à l'objet à mesurer, **caractérisé** ne ce que le système de détection est rotatif autour d'un axe de rotation (7) de manière que le système de détection soit rotatif autour de l'objet à mesurer pendant une rotation autour de l'axe de rotation.

14. Dispositif d'après la revendication 13, **caractérisé en ce que** l'axe de rotation (7) est compris dans le périmètre de l'objet à mesurer.

15. Dispositif d'après la revendication 13 ou 14, **caractérisé en ce que** le système de détection est entièrement rotatif autour de l'objet à mesurer.

16. Dispositif d'après la revendication 13, 14 ou 15, **caractérisé en ce qu'**on prévoit un dispositif de centrage pour un positionnement et/ou une fixation de l'objet à mesurer en position de mesure avant et/ou pendant le mesurage.

17. Dispositif d'après la revendication 13, 14, 15 ou 16, **caractérisé en ce que** le dispositif de référence est réalisé pour un balayage sans contact direct de la structure de référence.

18. Dispositif d'après la revendication 13, **caractérisé en ce que** le dispositif de référence est réalisé de manière à pouvoir effectuer un centrage mécanique de l'objet à mesurer à l'aide de la structure de référence.

19. Dispositif d'après une des revendications de 13 à 18, **caractérisé en ce qu'**on prévoit le système de détection et/ou le dispositif de référence pour juger la planéité et/ou l'orientation d'une section de surface d'objet à mesurer prévue sur l'objet à mesurer, orientée en direction essentiellement orthogonale par rapport à un axe de rotation du système de détection et réalisée pour le placement auprès d'une surface d'objet.

20. Dispositif d'après une des revendications de 13 à 19, **caractérisé en ce qu'**on prévoit sur le système de détection et/ou sur le dispositif de référence un dispositif de marquage pour le placement d'un repère sur l'objet à mesurer.

21. Dispositif d'après une des revendications de 13 à 20, **caractérisé en ce que** le dispositif de référence est disposé de manière rotative et au moins essentiellement coaxiale par rapport à un axe de rotation du système de détection.

22. Dispositif d'après une des revendications de 13 à 21, **caractérisé en ce qu'**on prévoit une intégration dans un transporteur de charges (14), notamment dans un système de transport linéaire.

23. Dispositif d'après une des revendications de 13 à 22, **caractérisé en ce qu'**on prévoit des organes de détection de la taille pour un positionnement de base du système de détection et/ou du dispositif de référence.
